(19) Europäisches Patentamt / European Patent Office / Office européen des brevets

(11) **EP 4 050 676 A1**

(12) **EUROPEAN PATENT APPLICATION**
published in accordance with Art. 153(4) EPC

(43) Date of publication:
**31.08.2022 Bulletin 2022/35**

(21) Application number: **20938503.8**

(22) Date of filing: **28.12.2020**

(51) International Patent Classification (IPC):
$H01M\ 4/134^{(2010.01)}$ $H01M\ 4/38^{(2006.01)}$

(52) Cooperative Patent Classification (CPC):
**H01M 4/587; H01M 4/133; H01M 4/134;
H01M 4/364; H01M 4/366; H01M 4/386;
H01M 4/483; H01M 4/625;** H01M 2004/021;
H01M 2004/027

(86) International application number:
**PCT/CN2020/140378**

(87) International publication number:
**WO 2022/140982 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Ltd.
Ningde City, Fujian 352100 (CN)**

(72) Inventor: **LIAO, Qunchao
Ningde
Fujian 352100 (CN)**

(74) Representative: **Icosa
83 avenue Denfert-Rochereau
75014 Paris (FR)**

(54) **NEGATIVE ELECTRODE SHEET, ELECTROCHEMICAL DEVICE COMPRISING NEGATIVE ELECTRODE SHEET, AND ELECTRONIC DEVICE**

(57) This application provides a negative electrode plate, and an electrochemical apparatus and electronic apparatus including such negative electrode plate. A negative electrode material layer of the negative electrode plate includes silicon-based particles and graphite particles, and pores are created inside the silicon-based particles, so that porosity $\alpha_1$ of the silicon-based particles and a percentage B of silicon in the silicon-based particles satisfy $P=0.5\alpha_1/(B-\alpha_1 B)$, where $0.2 \le P \le 1.6$, which can effectively alleviate swelling of the silicon-based particles during lithium intercalation, thereby improving cycling performance and reducing swelling and deformation of the electrochemical apparatus.

FIG. 1

**Description**

**TECHNICAL FIELD**

This application relates to the electrochemical field, and specifically, to a negative electrode plate, and an electrochemical apparatus and electronic apparatus including such negative electrode plate.

**BACKGROUND**

Lithium-ion secondary batteries have advantages such as high energy storage density, high open-circuit voltage, low self-discharge rate, long cycle life, and good safety, and therefore are widely applied to various fields such as electric energy storage, mobile electronic devices, electric vehicles, and aviation equipment. With rapid development of the mobile electronic devices and the electric vehicles, requirements for energy density, safety, cycling performance, service life, and the like of the lithium-ion secondary batteries are getting increasingly high in the market.

With a theoretical capacity of up to 4200 mAh/g, silicon-based materials are currently known as negative electrode materials with the highest theoretical capacity. In addition, silicon is abundant and cost effective. Therefore, at present, the silicon-based materials are often used as next-generation negative electrode materials with a high gram capacity for negative electrode plates in lithium-ion secondary batteries. However, the silicon-based materials have a volume change rate of up to 300% during lithium intercalation/deintercalation. As a result, the negative electrode materials are likely to crack and fall off, thereby affecting the electrochemical performance of the lithium-ion secondary batteries.

**SUMMARY**

This application is intended to provide a negative electrode plate, and an electrochemical apparatus and electronic apparatus including such negative electrode plate, to improve electrochemical performance of the electrochemical apparatus.

It should be noted that an example in which a lithium-ion battery is used as an electrochemical apparatus is used to illustrate this application below. However, the electrochemical apparatus in this application is not limited to the lithium-ion battery.

Specific technical solutions are as follows:

A first aspect of this application provides a negative electrode plate, including a negative electrode material layer, where the negative electrode material layer includes silicon-based particles and graphite particles, and the silicon-based particles include silicon and carbon; and porosity $\alpha_1$ of the silicon-based particles and a percentage B of silicon in the silicon-based particles satisfy $P=0.5\alpha_1/(B-\alpha_1 B)$, where $0.2 \leq P \leq 1.6$; where the porosity $\alpha_1$ of the silicon-based particles is 15% to 60%, and the percentage B of silicon in the silicon-based particles is 20wt% to 60wt%.

In this application, "the porosity $\alpha_1$ of the silicon-based particles" refers to a percentage of a volume of pores in the silicon-based particles in a total volume of the silicon-based particles.

In an embodiment of this application, porosity $\alpha_2$ of the negative electrode plate and the percentage B of silicon satisfy $P=0.5\alpha_1/(B-\alpha_1 B)$, where $0.2 \leq P \leq 1.6$. For example, a lower limit of P may include the following value: 0.2, 0.4, 0.5, or 0.8; and an upper limit of P may include the following value: 1.1, 1.5, or 1.6. When P is less than 0.2, it is difficult for pores reserved in the silicon-based particles to buffer volume swelling of nano-silicon during the lithium intercalation, it is difficult for a carbonaceous material with such mechanical strength to withstand enormous swelling stress, and as a result, a structure of the silicon-based particles breaks down, exacerbating the electrochemical performance. When P is greater than 1.6, pores reserved in the silicon-based particles are too large, and as a result, mechanical compressive strength of the carbonaceous material deteriorates, the silicon-based particles are prone to breakdown during processing, and a large number of fresh interfaces are exposed, reducing first-cycle efficiency, cycling performance, and energy density of the lithium-ion battery. Therefore, controlling P within the foregoing range can effectively improve the energy density, cycling performance, and anti-swelling performance of the lithium-ion battery.

In this application, the porosity $\alpha_1$ of the silicon-based particles is 15% to 60%. For example, a lower limit of the porosity $\alpha_1$ of the silicon-based particles may include the following value: 15%, 16%, 18%, 25%, 32%, or 34%; and an upper limit of the porosity $\alpha_1$ of the silicon-based particles may include the following value: 38%, 43%, 45%, 47%, 56%, or 60%. When the porosity $\alpha_1$ of the silicon-based particles is less than 15%, it is difficult for reserved space to buffer volume swelling of nano-silicon during the lithium intercalation, it is difficult for a carbonaceous material with such mechanical strength to withstand enormous swelling stress, and as a result, a structure of the silicon-based particles breaks down, exacerbating the electrochemical performance. When the porosity $\alpha_1$ of the silicon-based particles is greater than 60%, pores are too large, and as a result, compressive strength of the carbonaceous material deteriorates, and the silicon-based particles are prone to breakdown during processing, exacerbating the electrochemical performance.

In this application, the percentage B of silicon in the silicon-based particles is 20wt% to 60wt%. For example, a lower limit of the percentage B of silicon may include the following value: 20wt% or 40wt%; and an upper limit of the percentage B of silicon may include the following value: 45wt% or 60wt%. When the percentage B of silicon is less than 20wt%, the negative electrode material layer has a small gram capacity; or when the percentage B of silicon is greater than 60wt%, a volume change rate of the silicon-based particles in the process of lithium intercalation/deintercalation is increased, thereby generating more SEI and accelerating consumption of lithium ions and a liquid electrolyte in the lithium-ion battery, which significantly increases impedance of the lithium-ion battery.

In this application, the silicon-based particles may include silicon and carbon, and the silicon-based particles may further include oxygen, nitrogen, phosphorus, sulfur, and the like. This application imposes no particular limitation on the type of the silicon-based particles, provided that the purpose of this application can be achieved. For example, the silicon-based particles may include at least one of nano-silicon, silicon nano-silicon, silicon carbide, nano silicon oxide, or silicon-metal alloy.

In general, the negative electrode plate provided in this application includes the negative electrode material layer, and the negative electrode material layer includes the silicon-based particles and the graphite particles. Pores are created inside the silicon-based particles, so that the porosity $\alpha_1$ of the silicon-based particles and the percentage B of silicon in the silicon-based particles satisfy $P=0.5\alpha_1/(B-\alpha_1B)$, where $0.2\leq P\leq 1.6$, which can effectively alleviate swelling of the silicon-based particles during the lithium intercalation, thereby improving the cycling performance and reducing swelling and deformation of the lithium-ion battery.

In an embodiment of this application, porosity $\alpha_2$ of the negative electrode plate is 15% to 41%. For example, a lower limit of the porosity $\alpha_2$ of the negative electrode plate may include the following value: 15%, 19%, or 28%; and an upper limit of the porosity $\alpha_2$ of the negative electrode plate may include the following value: 28%, 29%, 35%, or 41%. When the porosity $\alpha_2$ of the negative electrode plate is less than 15%, it is difficult for the liquid electrolyte to implement full infiltration, and as a result, a migration distance of lithium ions is increased, exacerbating kinetic performance of the lithium-ion battery. When the porosity $\alpha_2$ of the negative electrode plate is greater than 41%, contact between the silicon-based particles and the graphite particles is prone to failure during cycling of the lithium-ion battery, reducing cycling performance and energy density of the lithium-ion battery.

In this application, the "porosity $\alpha_2$ of the negative electrode plate" refers to a percentage of a volume of pores between various particles in the negative electrode plate in a total volume of the negative electrode plate.

In this application, the pores in the silicon-based particles and the pores in the negative electrode plate separately include micropores with a pore diameter less than 2 nm, mesopores with a pore diameter of 2 nm to 50 nm, or macropores with a pore diameter greater than 50 nm. Numbers of micropores, mesopores, and macropores in this application are not particularly limited, provided that the purpose of this application can be achieved.

In an embodiment of this application, a sum $\alpha$ of the porosity $\alpha_1$ of the silicon-based particles and the porosity $\alpha_2$ of the negative electrode plate satisfies $45\%<\alpha<90\%$. For example, a lower limit of the sum $\alpha$ of the porosity $\alpha_1$ of the silicon-based particles and the porosity $\alpha_2$ of the negative electrode plate may include the following value: 43%, 46%, 47%, 51%, 53%, 60%, 62%, or 67%; and an upper limit of the sum $\alpha$ of the porosity $\alpha_1$ of the silicon-based particles and the porosity $\alpha_2$ of the negative electrode plate may include the following value: 71%, 72%, 73%, 88%, or 89%. When the sum $\alpha$ of the porosity $\alpha_2$ of the negative electrode plate and the porosity $\alpha_1$ of the silicon-based particles is controlled within the foregoing range, the cycling performance and the anti-swelling performance of the lithium-ion battery are significantly improved.

In an embodiment of this application, a percentage of silicon-based particles in the negative electrode material layer is 3wt% to 80wt%. For example, a lower limit of the percentage of silicon-based particles in the negative electrode material layer may include the following value: 3wt%, 10wt%, 20wt%, 25wt%, 30wt%, 35wt%, or 40wt%; and an upper limit of the percentage of silicon-based particles in the negative electrode material layer may include the following value: 45wt%, 55wt%, 60wt%, 70wt%, or 80wt%. The percentage of silicon-based particles in the negative electrode material layer is controlled within the foregoing range, so that the negative electrode material layer has a high gram capacity, thereby increasing the energy density of the lithium-ion battery.

In this application, the percentage of the graphite particles in the negative electrode material layer is not particularly limited, provided that the purpose of this application can be achieved. For example, the percentage of the graphite particles in the negative electrode material layer may be 20wt% to 97wt%. A lower limit of the percentage of the graphite particles in the negative electrode material layer may include the following value: 20wt%, 25wt%, 30wt%, or 40wt%, and an upper limit of the percentage of the graphite particles in the negative electrode material layer may include the following value: 50wt%, 60wt%, 70wt%, 80wt%, or 90wt%. The percentage of the graphite particles in the negative electrode material layer is controlled within the foregoing range, so that conductivity of the negative electrode material layer is enhanced, reducing contact between the negative electrode material layer and the liquid electrolyte and reducing generation of the SEI.

In an embodiment of this application, a peak intensity ratio of a peak D to a peak G in the Raman test of the silicon-based particles is 0.2 to 3; and the peak D is a peak whose shift range is 1255 cm$^{-1}$ to 1355 cm$^{-1}$ in a Raman spectrum of the silicon-based particles, and the peak G is a peak whose shift range is 1575 cm$^{-1}$ to 1600 cm$^{-1}$ in the

Raman spectrum of the silicon-based particles. When the peak intensity ratio of the peak D to the peak G in the Raman test of the silicon-based particles is controlled within the foregoing range, the carbonaceous material of the silicon-based particles has sufficient pore defects, to help inhibit swelling and deformation of the carbonaceous material during cycling, thereby improving the anti-swelling performance and cycling performance of the negative electrode plate.

In an embodiment of this application, there is a carbon material on the surfaces of the silicon-based particles. This application imposes no specific limitation on the type of the carbon material, provided that the purpose of this application can be achieved. For example, the carbon material may include at least one of amorphous carbon, carbon nanotube, carbon nanoparticle, vapor-deposited carbon fiber, graphene, or the like. In some embodiments of this application, the carbon nanotube may include at least one of a single-walled carbon nanotube or a multi-walled carbon nanotube. This application imposes no particular limitation on a method for preparing the carbon material on the surfaces of the silicon-based particles, provided that the purpose of this application can be achieved. In this application, the percentage of the carbon material is not particularly limited, provided that the purpose of this application can be achieved. For example, the percentage of the carbon material may be 0.01wt% to 1wt% of the silicon-based particles, for example, 0.01wt%, 0.1wt%, 0.5wt%, or 1wt%. Providing the carbon material on the surfaces of the silicon-based particles helps improve interface stability of the surfaces of the silicon-based particles to constrain shift of the silicon-based particles and also effectively alleviate a structural damage caused by volume swelling and shrinkage of the silicon-based particles, avoiding generation of fresh interfaces, improving the cycling performance, and reducing the swelling and the deformation for the negative electrode plate.

In an embodiment of this application, there is a polymer material on the surfaces of the silicon-based particles. This application imposes no particular limitation on the type of the polymer material, provided that the purpose of this application can be achieved. For example, the polymer material may include at least one of polyvinylidene fluoride (PVDF), carboxymethyl cellulose (CMC), sodium carboxymethyl cellulose (CMC-Na), polyvinylpyrrolidone (PVP), polyacrylic acid, poly styrene butadiene rubber, derivative thereof, or the like. In some embodiments of this application, the polymer material may include sodium carboxymethyl cellulose, polyvinylpyrrolidone, polyvinylidene fluoride, and polyacrylic acid sodium (PAANa). This application imposes no particular limitation on a method for preparing the polymer material on the surfaces of the silicon-based particles, provided that the purpose of this application can be achieved. In this application, the percentage of the polymer material is not particularly limited, provided that the purpose of this application can be achieved. The percentage of the polymer material may be 0wt% to 0.4wt% of the silicon-based particles, for example, 0wt%, 0.025wt%, 0.15wt%, or 0.4wt%.

In an embodiment of this application, a median particle size $D_v50$ of the silicon-based particles is less than 20 $\mu$m. When the median particle size $D_v50$ of the silicon-based particles is greater than 20 $\mu$m, there may be problems such as scratches during the processing of the negative electrode plate, and mutual contact points between the particles are reduced, thereby affecting the cycling performance of the negative electrode plate. Controlling the median particle size $D_v50$ of the silicon-based particles in this application within the foregoing range can improve the cycling performance of the negative electrode plate. The particle size of the graphite particles in this application is not particularly limited, provided that the purpose of this application can be achieved.

In an embodiment of this application, a specific surface area of the silicon-based particles is less than 50 $m^2$/g. When the specific surface area of the silicon-based particles is greater than 50$m^2$/g, the specific surface area of the silicon-based particle is too large, side reactions affect the performance of the lithium-ion battery, and a higher proportion of binder needs to be consumed, causing a decrease in adhesion between the negative electrode material layer and a negative electrode current collector and a higher growth rate of internal resistance. A value of the specific surface area of the graphite particles in this application is not particularly limited, provided that the purpose of this application can be achieved.

Compacted density of the negative electrode plate in this application is 1.0 $g/cm^3$ to 1.9 $g/cm^3$, so that the lithium-ion battery can have high energy density.

In this application, the negative electrode current collector in the negative electrode plate is not particularly limited, provided that the purpose of this application can be achieved. For example, the negative electrode current collector may include copper foil, copper alloy foil, nickel foil, stainless steel foil, titanium foil, nickel foam, copper foam, a composite current collector, or the like. In this application, thicknesses of the negative electrode current collector and the negative electrode material layer are not particularly limited, provided that the purpose of this application can be achieved. For example, the thickness of the negative electrode current collector is 6 $\mu$m to 10 $\mu$m, and the thickness of the negative electrode material layer is 30 $\mu$m to 120 $\mu$m. The thickness of the negative electrode plate in this application is not particularly limited, provided that the purpose of this application can be achieved. For example, the thickness of the negative electrode plate is 50 $\mu$m to 150 $\mu$m.

Optionally, the negative electrode plate may further include a conductive layer, and the conductive layer is located between the negative electrode current collector and the negative electrode material layer. Composition of the conductive layer is not particularly limited, and the conductive layer may be a conductive layer commonly used in the art. The conductive layer includes a conductive agent and a binder.

A positive electrode plate in this application is not particularly limited, provided that the purpose of this application can be achieved. For example, the positive electrode plate usually includes a positive electrode current collector and a positive electrode material layer. The positive electrode current collector is not particularly limited, provided that the purpose of this application can be achieved. For example, the positive electrode current collector may include aluminum foil, aluminum alloy foil, a composite current collector, or the like. The positive electrode material layer includes a positive electrode active material, and the positive electrode active material is not particularly limited, provided that the purpose of this application can be achieved. For example, the positive electrode active material may include at least one of lithium nickel cobalt manganate (811, 622, 523, and 111), lithium nickel cobalt aluminate, lithium iron phosphate, lithium-rich manganese-based material, lithium cobalt oxide, lithium manganate oxide, lithium manganese iron phosphate, or lithium titanate. Thicknesses of the positive electrode current collector and the positive electrode material layer in this application are not particularly limited, provided that the purpose of this application can be achieved. For example, the thickness of the positive electrode current collector is 8 $\mu$m to 12 $\mu$m, and the thickness of the positive electrode material layer is 30 $\mu$m to 120 $\mu$m.

Optionally, the positive electrode plate may further include a conductive layer, and the conductive layer is located between the positive electrode current collector and the positive electrode material layer. Composition of the conductive layer is not particularly limited, and the conductive layer may be a conductive layer commonly used in the art. The conductive layer includes a conductive agent and a binder.

The conductive agent is not particularly limited, provided that the purpose of this application can be achieved. For example, the conductive agent may include at least one of conductive carbon black (Super P), carbon nanotubes (CNTs), carbon fiber, flake graphite, Ketjen black, graphene, or the like. The binder is not particularly limited, and any binder known in the art can be used provided that the purpose of this application can be achieved. For example, the binder may include at least one of polypropylene glycol, sodium polyacrylate, potassium polyacrylate, lithium polyacrylate, polyimide, polyimide, polyamide-imide, styrene butadiene rubber (SBR), polyvinyl alcohol (PVA), polyvinylidene fluoride, polytetrafluoroethylene ethylene (PTFE), carboxymethyl cellulose, sodium carboxymethyl cellulose (CMC-Na), or the like. For example, styrene butadiene rubber (SBR) may be selected as the binder.

The separator in this application is not particularly limited, provided that the purpose of this application can be achieved. For example, the separator is at least one of a polyethylene (PE) or polypropylene (PP)-dominant polyolefin (PO) separator, a polyester film (for example, a polyethylene terephthalate (PET) film), a cellulose film, a polyimide (PI) film, a polyamide (PA) film, a spandex or aramid film, a woven film, a non-woven film (non-woven fabric), a microporous film, a composite film, separator paper, a laminated film, a spun film, or the like.

For example, the separator may include a substrate layer and a surface treatment layer. The substrate layer may be a non-woven fabric, membrane, or composite membrane having a porous structure, and a material of the substrate layer may include at least one of polyethylene, polypropylene, polyethylene terephthalate, polyimide, or the like. Optionally, a polypropylene porous membrane, a polyethylene porous membrane, polypropylene nonwoven fabric, polyethylene nonwoven fabric, or a polypropylene-polyethylene-polypropylene porous composite membrane can be used. Optionally, the surface treatment layer is provided on at least one surface of the substrate layer, and the surface treatment layer may be a polymer layer or an inorganic layer, or may be a layer including both a polymer and an inorganic substance.

For example, the inorganic layer includes inorganic particles and a binder. The inorganic particles are not particularly limited, and may be selected from, for example, at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited, and may be selected from, for example, a combination of one or more of polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, and polyhexafluoropropylene. The polymer layer includes a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, poly(vinylidene fluoride-hexafluoropropylene), or the like. The lithium-ion battery in this application further includes the electrolyte. The electrolyte may be one or more of a gel electrolyte, a solid electrolyte, and a liquid electrolyte, and the liquid electrolyte includes a lithium salt and a non-aqueous solvent.

In some embodiments of this application, the lithium salt may include at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoro oxalate borate. For example, LiPF6 may be selected as the lithium salt because LiPF6 can provide high ionic conductivity and improve cycling performance.

The non-aqueous solvent is a carbonate compound, a carboxylate compound, an ether compound, another organic solvent, or a combination thereof. The carbonate compound may be a linear carbonate compound, a cyclic carbonate compound, a fluorocarbonate compound, or a combination thereof. An instance of the linear carbonate compound is dimethyl carbonate (DMC), diethyl carbonate (DEC), dipropyl carbonate (DPC), methyl propyl carbonate (MPC), ethylene propyl carbonate (EPC), methyl ethyl carbonate (MEC), or a combination thereof. An instance of the cyclic carbonate compound is ethylene carbonate (EC), propylene carbonate (PC), butylene carbonate (BC), vinyl ethylene carbonate (VEC), and a combination thereof. An instance of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, and a combination thereof. An instance of the carboxylate compound is methyl formate, methyl acetate, ethyl acetate, n-propyl acetate, tert-butyl acetate, methyl propionate, ethyl propionate, propyl propionate, $\gamma$-butyrolactone, decanolide, valerolactone, mevalonolactone, caprolactone, and a combination thereof. An instance of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, and a combination thereof. An instance of the another organic solvent is dimethyl sulfoxide, 1,2-dioxolane, sulfolane, methyl-sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, and a combination thereof.

This application further provides an electrochemical apparatus, including a negative electrode plate, where the negative electrode plate is the negative electrode plate according to any one of the foregoing embodiments, and the electrochemical apparatus has good cycling performance, anti-swelling performance, rate performance, and volumetric energy density.

The electrochemical apparatus in this application is not particularly limited, and may include any apparatus in which an electrochemical reaction occurs. In some embodiments, the electrochemical apparatus may include, but is not limited to a lithium metal secondary battery, a lithium-ion secondary battery (lithium-ion battery), a lithium polymer secondary battery, a lithium-ion polymer secondary battery, or the like.

This application further provides an electronic apparatus, including the electrochemical apparatus according to the embodiments of this application, and the electronic apparatus has good cycling performance, anti-swelling performance, rate performance, and volumetric energy density.

The electronic apparatus in this application is not particularly limited, and the electronic apparatus may be any known electronic apparatus in the prior art. In some embodiments, the electronic apparatus may include but not limited to a notebook computer, a pen-input computer, a mobile computer, an electronic book player, a portable telephone, a portable fax machine, a portable copier, a portable printer, a headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, and the like.

A process for preparing the electrochemical apparatus is well known to a person skilled in the art, and is not particularly limited in this application. For example, the electrochemical apparatus can be manufactured through the following process: A positive electrode plate and a negative electrode plate are stacked with a separator inbetween, and are put into a housing after undergoing operations such as winding and folding as needed, a liquid electrolyte is injected into the housing, and the housing is sealed. The separator used is the foregoing separator provided in this application. In addition, an overcurrent protection element, a guide plate, and the like may be provided in the housing as needed, to prevent internal pressure increase, overcharge, and over-discharge of the electrochemical apparatus.

Based on the negative electrode plate and the electrochemical apparatus and the electronic apparatus including such negative electrode plate provided in this application, the negative electrode material layer of the negative electrode plate includes the silicon-based particles and the graphite particles, and the pores are created inside the silicon-based particles, so that the porosity $\alpha_1$ of the silicon-based particles and the percentage B of silicon in the silicon-based particles satisfy $P=0.5\alpha_1/(B-\alpha_1 B)$, where $0.2 \leq P \leq 1.6$, which can effectively alleviate swelling of the silicon-based particles during the lithium intercalation, thereby improving the cycling performance and reducing swelling and deformation for the electrochemical apparatus.

## BRIEF DESCRIPTION OF DRAWINGS

To describe the technical solutions in this application and the prior art more clearly, the following briefly describes the accompanying drawings required for describing the embodiments and the prior art. Apparently, the accompanying drawings in the following description show merely some embodiments of this application.

FIG. 1 is a cross-sectional SEM (scanning electron microscope) image of a negative electrode plate according to an embodiment of this application; and
FIG. 2 is a magnified SEM image of FIG. 1.

Reference signs: 10. Pores in silicon-based particles; and 20. Pores in a negative electrode plate.

## DESCRIPTION OF EMBODIMENTS

To make the objectives, technical solutions, and advantages of this application more comprehensible, the following describes this application in detail with reference to accompanying drawings and embodiments. Apparently, the described embodiments are merely some but not all of the embodiments of this application. All other technical solutions obtained by a person of ordinary skill in the art based on the embodiments of this application fall within the protection scope of this application.

It should be noted that, in the specific embodiments of this application, an example in which a lithium-ion battery is used as an electrochemical apparatus is used to illustrate this application. However, the electrochemical apparatus in this application is not limited to the lithium-ion battery.

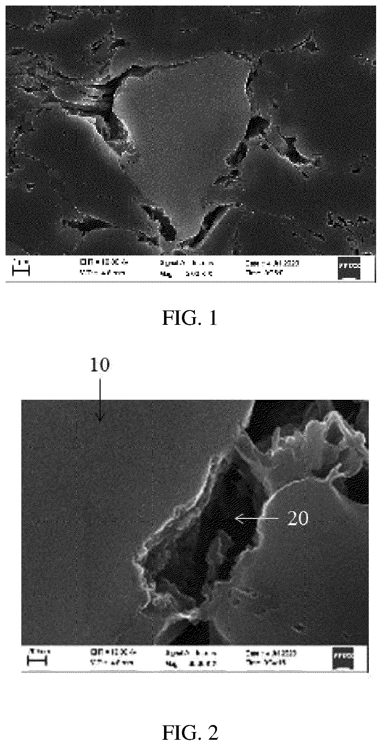

FIG. 1 is a cross-sectional SEM image of a negative electrode plate according to an embodiment of this application. FIG. 2 is a magnified SEM image of FIG. 1. Referring to FIG. 2, pores 10 in silicon-based particles are pores inside the silicon-based particles, and pores 20 in a negative electrode plate are pores between various particles in a negative electrode material layer.

### Examples

The following uses examples and comparative examples to describe the embodiments of this application more specifically. Various tests and evaluations were performed in the following methods. In addition, unless otherwise specified, "part" and "%" are based on mass.

### Test method and device:

### Porosity test for silicon-based particles:

An interface of the silicon-based particles was photographed by using a scanning transmission electron microscopy (STEM), and an obtained STEM image was used to measure porosity. A specific process was as follows: Binarization processing was performed on an image threshold (threshold) of the STEM image by using Image J software. After a size was measured according to a scale, analyze particles (Analyze Particles) were used to measure an area of pores to obtain an area percentage, that is, porosity $\alpha_1$ of the silicon-based particles. More than 20 silicon-based particles in an electrode plate were randomly selected for this same test, to obtain an average value.

### Test of percentage of silicon in silicon-based particles:

The silicon-based particles were sliced, and an element mass percentage average was measured by using EDS (energy dispersive X-ray spectroscopy) linear scanning.

### Porosity test for a negative electrode plate:

A same die was used for punching to obtain 50 negative electrode plates with a radius of d, a thickness h of each electrode plate was measured by using a micrometer, and the negative electrode plates were loaded into a sample chamber of an AccuPyc 1340 instrument. Helium (He) was used to fill the electrode plates in the sealed sample chamber, and then true volumes V of the electrode plates were obtained by using Bohr's law: PV=nRT. After the test was completed, the number of small wafers was counted, and apparent volumes of the samples were calculated as follows: $\pi d^2 \times 50 \times h$. Finally, porosity $\alpha_2$ of the negative electrode plates was obtained by the following equation: $\alpha_2 = 1 - V/\pi d^2 \times 50 \times h$.

### Specific surface area test:

At low constant temperature (-199°C to -193°C), after amounts of gas adsorbed on a solid surface under different relative pressure were measured, an adsorption capacity of a sample monolayer was obtained based on the Brunauer-Emmett-Teller adsorption theory and a equation thereof (BET equation), to calculate a specific surface area of the solid.

BET equation:

$$\frac{p}{w(P0-\mathrm{p})} = \frac{1}{Wm\mathrm{C}} + (c-1)/(\mathrm{WmC}) \cdot \mathrm{P/P0}$$

W: Mass of gas adsorbed by the solid sample under relative pressure (P/P0), measured in $cm^3/g$;

Wm: Saturated adsorption amount of gas covering an entire monolayer, measured in $cm^3/g$;

C: Constant related to heat of adsorption and condensation of a first layer;

Slope: (c - 1)/(WmC); intercept: 1/WmC; total specific surface area: (Wm×N×Acs/M); and

Specific surface area: S=St/m, where m is mass of the sample; and Acs: an average area 16.2 $A^2$ occupied per N2 molecule.

1.5 g to 3.5 g of sample powder was weighed and put into a test sample tube of TriStar II 3020, and was degassed at 200°C for 120 minutes before testing.

**Method for testing gram capacity of a negative electrode material layer:**

The gram capacity of the negative electrode material layer was tested by using a button battery. An assembled button battery was put under constant temperature of 25°C for 5 minutes, discharged to 0.005 V at 0.05C, left standing for 5 minutes, and discharged to 0.005 V at 20 μA. A sum of two discharge capacities was D0. After 5 minutes of standing, the assembled button battery was charged to 2.0 V at 0.1C, a charge capacity was C0 at that point, and first-cycle charging efficiency was C0/D0×100%.

**Compacted density test for a negative electrode plate:**

A punching machine was used to punch the negative electrode plate to obtain a small wafer with an area of S, mass of the small wafer was measured and recorded as $M_1$, and a thickness of the small wafer was measured with a micrometer and recorded as $H_1$. The same punching machine was used for punching to obtain a current collector with the same area S, mass of the current collector was measured and recorded as $M_2$, and a thickness of the current collector was measured with the micrometer and recorded as $H_2$. The compacted density of the negative electrode was $(M_1-M_2)/(H_1-H_2)/S$.

**Particle size test:**

Approximately 0.02 g of sample powder was added to a 50 ml clean beaker, approximately 20 ml of deionized water was added, and a few drops of 1% surfactant were added so that the powder was fully dispersed in the water. Ultrasound processing was performed using a 120 W ultrasonic cleaning machine on the solution for 5 minutes, and particle size distribution was measured by using a laser diffraction particle size analyzer MasterSizer 2000.

$D_v50$ was a diameter, where particles of this size and smaller than this size accounted for 50% in the volume-based distribution obtained using the laser diffraction particle size analyzer.

**Method for testing a button battery made of a powder material:**

The negative electrode active material obtained in the examples, conductive carbon black, and a binder PAA (modified polyacrylic acid) were added to deionized water at a mass ratio of 80:10:10, then stirred into a slurry, and applied with a scraper to form a coating with a thickness of 100 μm. The coating was dried in a vacuum drying oven at approximately 85°C for 12 hours, and then cut into a wafer with a diameter of 1 cm in a dry environment by using a punching machine. In a glove box, a lithium metal plate was used as a counter electrode, a Ceglar composite membrane was selected as a separator, and a liquid electrolyte was injected to obtain a button battery. For a charging and discharging test, a LAND (LAND) series battery test was performed on the battery, to measure charging and discharge capacities of the battery.

First, the battery was discharged to 0.005 V at 0.05C, after 5 minutes of standing, the battery was discharged to 0.005 V at 50 μA, and after another 5 minutes of standing, the battery was discharged to 0.005 V at 10 μA to obtain a first-cycle lithium intercalation capacity of the material. Then, the battery was charged to 2 V at 0.1C to obtain a first-cycle lithium deintercalation capacity. Finally, a ratio of the first-cycle lithium deintercalation capacity to the first-cycle lithium intercalation capacity was the first-cycle efficiency of the material.

**Cycling performance test:**

Test temperature was 25/45°C, and the battery was charged to 4.4 V at a constant current of 0.7C, and charged to 0.025C at a constant voltage. After 5 minutes of standing, the battery was discharged to 3.0 V at 0.5C. A capacity obtained in this step was used as an initial capacity, and the battery was charged at 0.7C or discharged at 0.5C to perform a cycling test, and a ratio of a capacity obtained in each step to the initial capacity was calculated to obtain a capacity attenuation curve. The number of cycles when a capacity retention rate reached 90% after cycling at 25°C was recorded as room-temperature cycling performance of the lithium-ion battery, and the number of cycles when a capacity retention rate reached 80% after cycling at 45°C was recorded as high-temperature cycling performance of the lithium-ion battery. The numbers of cycles in the two cases were compared to obtain the cycling performance of the material.

**Discharging rate test:**

The battery was discharged to 3.0 V at 0.2C under 25°C, left standing for 5 minutes, charged to 4.45 V at 0.5C, charged to 0.05C at a constant voltage, and then left standing for 5 minutes. The discharging rate was adjusted, to perform discharging tests at 0.2C, 0.5C, 1C, 1.5C, and 2.0C respectively, to obtain discharge capacities respectively. A capacity obtained in each rate was compared with a capacity obtained at 0.2C, and the ratio at 2 C and the ratio at 0.2C were compared, to obtain rate performance.

**Swelling rate test for a lithium-ion battery at full charging:**

A thickness of a fresh lithium-ion battery in a half charged state was measured by using a spiral micrometer. After 400 cycles (cls), the lithium-ion battery was in a fully charged state. Then, a thickness of the lithium-ion battery was measured by using the spiral micrometer. The thickness was compared with the initial thickness of the fresh lithium-ion battery in the half charged state, to obtain a swelling rate of the fully-charged lithium-ion battery.

**Energy density calculation:**

After the lithium-ion battery was charged to 4.45 V at 25°C, a length, a width, and a height of the lithium-ion battery were measured by using a laser thickness gauge to obtain a volume (V) of the lithium-ion battery. Then, the lithium-ion battery was discharged to 3 V at 0.2C to obtain a discharge capacity (C) and an average voltage platform (U) of the lithium-ion battery, and volumetric energy density (ED) could be calculated by using the following equation: ED=C×U/V.

**Example 1**

Preparation of a negative electrode active material

A porous carbon material with porosity of 38% was placed in a sealed gas reactor containing silicon, and heated to 500°C, and the temperature was maintained for 4 hours. After cooling, screening, and degaussing, silicon-based particles whose porosity $\alpha_1$ was 16% could be obtained. The percentage of carbon in the silicon-based particles was 60wt%, and the percentage B of silicon in the silicon-based particles was 40wt%.

Preparation of a negative electrode plate

The foregoing prepared negative electrode active material, a graphite particle, and nano conductive carbon black were mixed at a mass ratio of 30:66.5:3.5 to obtain a first mixture. The first mixture and a binder PAA were added at a mass ratio of 95:5 to deionized water, to prepare a slurry containing 45% solid, and stirred uniformly to obtain a first mixed slurry. The first mixed slurry was evenly applied on a surface of copper foil serving as the negative electrode current collector with a thickness of 8 $\mu$m, and dried in the air drying oven for 2 minutes at 120°C, to obtain a negative electrode plate whose one surface was coated with a negative electrode active material, with a coating weight of 7.5 mg/cm$^2$. After the foregoing steps were completed, single-sided coating of the negative electrode plate was completed. Then, the foregoing steps were repeated on the other surface of the negative electrode plate to obtain a negative electrode plate whose both surfaces were coated with the negative electrode active material. After cold pressing was completed, a negative electrode plate with porosity $\alpha_2$ of 15% was obtained, and the electrode plate was cut into a size of 41 mm × 61 mm for use.

Preparation of a positive electrode plate

A positive electrode active material lithium cobalt oxide (LiCoO$_2$), conductive carbon black (Super P), and polyvinylidene fluoride (PVDF) were mixed at a weight ratio of 97.5:1.0:1.5, and N-methylpyrrolidone (NMP) was added as a solvent to prepare a slurry containing 75% solid. The slurry was mixed evenly. The slurry was uniformly applied on a surface of aluminum foil serving as the positive electrode current collector with a thickness of 10 $\mu$m, and dried at 90°C, to obtain a positive electrode plate with a coating thickness of 110 $\mu$m. After the foregoing steps were completed, single-sided coating of the positive electrode plate was completed. Then, the foregoing steps were repeatedly performed on the other surface of the positive electrode plate to obtain a positive electrode plate whose both surfaces were coated with the positive electrode active material. After coating was completed, the electrode plate was cut into a size of 38 mm×58 mm for use.

Preparation of a liquid electrolyte

In an atmosphere of dry argon, organic solvents of ethylene carbonate (EO), ethyl methyl carbonate, and diethyl carbonate were mixed at a mass ratio of EC:EMC:DEC=30:50:20 to obtain an organic solution, and then a lithium salt lithium hexafluorophosphate was added to the organic solvent for dissolution and mixed uniformly, to obtain a liquid electrolyte with a lithium salt concentration of 1.15 Mol/L.

Preparation of a separator

Aluminum oxide and polyvinylidene fluoride were mixed at a mass ratio of 90:10 and dissolved in deionized water to form a ceramic slurry with 50% solid. Then, the ceramic slurry was uniformly applied on a face of a porous substrate (polyethylene with a thickness of 7 $\mu$m, an average pore diameter of 0.073 $\mu$m, and porosity of 26%) through the micro-gravure coating method, and dried to obtain a double-layer structure of a ceramic coating and the porous substrate. A thickness of the ceramic coating was 50 $\mu$m.

Polyvinylidene fluoride (PVDF) and polyacrylate were mixed at a mass ratio of 96:4 and dissolved in deionized water to form a polymer slurry with 50% solid. Then, the polymer slurry was uniformly applied on the two surfaces of the double-layer structure of the ceramic coating and the porous substrate through the micro-gravure coating method, and dried to obtain the separator. A thickness of a single-layer coating formed by the polymer slurry was 2 $\mu$m.

Preparation of a lithium-ion battery

The foregoing prepared positive electrode plate, the separator, and the negative electrode plate were sequentially stacked, the separator was sandwiched between the positive electrode and the negative electrode for separation, and the stack was wound to obtain an electrode assembly. The electrode assembly was placed in a packaging bag made of an aluminum-plastic film, and dried, and an electrolyte was injected. The lithium-ion battery was obtained through processes such as vacuum packaging, standing, formation, degassing, and trimming.

Example 2, Example 3, Example 4, Example 5, Example 6, Example 7, Example 8, Example 9, Example 10, Example 11, Example 12, Example 13, Example 14, Example 15, Example 16, and Example 17 all have the same preparation steps as Example 1 for preparation of a negative electrode active material, preparation of a negative electrode plate, preparation of a positive electrode plate, preparation of a liquid electrolyte, preparation of a separator, and preparation of a lithium-ion battery, except for the changes of related preparation parameters shown in Table 1.

**Table 1**

| Example | Porosity $\alpha_1$ of silicon-based particle | Porosity $\alpha_2$ of negative electrode plate | Percentage of carbon in silicon-based particle (wt%) | Percentage B of silicon in silicon-based particle (wt%) |
|---|---|---|---|---|
| 1 | 16% | 15% | 60 | 40 |
| 2 | 25% | 15% | 60 | 40 |
| 3 | 38% | 15% | 60 | 40 |
| 4 | 47% | 15% | 60 | 40 |
| 5 | 56% | 15% | 60 | 40 |
| 6 | 38% | 15% | 80 | 20 |
| 7 | 38% | 15% | 40 | 60 |
| 8 | 32% | 15% | 55 | 45 |
| 9 | 32% | 19% | 55 | 45 |
| 10 | 32% | 28% | 55 | 45 |
| 11 | 32% | 35% | 55 | 45 |

(continued)

| Example | Porosity $\alpha_1$ of silicon-based particle | Porosity $\alpha_2$ of negative electrode plate | Percentage of carbon in silicon-based particle (wt%) | Percentage B of silicon in silicon-based particle (wt%) |
|---|---|---|---|---|
| 12 | 32% | 41% | 55 | 45 |
| 13 | 15% | 28% | 55 | 45 |
| 14 | 18% | 28% | 55 | 45 |
| 15 | 34% | 28% | 55 | 45 |
| 16 | 45% | 28% | 55 | 45 |
| 17 | 60% | 28% | 55 | 45 |

**Example 18**

Preparation of a negative electrode active material

(1) A porous carbon material with porosity of 38% was placed in a sealed gas reactor containing silicon, and heated to 500°C, and the temperature was maintained for 4 hours. After cooling, screening, and degaussing, silicon-based particles whose porosity $\alpha_1$ was 16% could be obtained. The percentage of carbon in the silicon-based particles was 60wt%, and the percentage B of silicon in the silicon-based particles was 40wt%.
(2) The silicon-based particles obtained in (1) were added to single-walled carbon nanotubes (SCNT) containing a dispersant sodium carboxymethyl cellulose (CMC-Na) for 2 hours of dispersion until a uniform mixed solution was formed, and the uniform mixed solution was spray dried to obtain powder. The powder was crushed and sieved with a 400-mesh sieve to obtain the negative electrode material in which a mass ratio of silicon-based particles: SCNT: sodium carboxymethyl cellulose was 99.75:0.1:0.15.

Preparation of a negative electrode plate, preparation of a positive electrode plate, preparation of a liquid electrolyte, preparation of a separator, and preparation of a lithium-ion battery were the same as those in Example 2.
Example 19, Example 20, Example 21, Example 22, Example 23, Example 24, Example 25, Example 26, Example 27, Example 28, Example 29, Example 30, Example 31, Example 32, and Example 33 have the same preparation steps as Example 18 for preparation of a negative electrode active material, preparation of a negative electrode plate, preparation of a positive electrode plate, preparation of a liquid electrolyte, preparation of a separator, and preparation of a lithium-ion battery, except for the changes of related preparation parameters shown in Table 2.

Table 2

| Example | Porosity $\alpha_1$ of silicon-based particle | Porosity $\alpha_2$ of negative electrode plate | Percentage of carbon in silicon-based particle (wt%) | Percentage B of silicon in silicon-based particle (wt%) | Type of carbon material | Type of dispersant | Mass ratio of silicon-based particle, carbon material, and dispersant |
|---|---|---|---|---|---|---|---|
| 18 | 16% | 15% | 60 | 40 | SCNT | CMC-Na | 99.75:0.1:0.15 |
| 19 | 16% | 15% | 60 | 40 | Multi-walled carbon nanotube (MCNT) | CMC-Na | 99.75:0.1:0.15 |
| 20 | 16% | 15% | 60 | 40 | SCNT:MCNT = 1:1 | CMC-Na | 99.75:0.1:0.15 |
| 21 | 16% | 15% | 60 | 40 | / | CMC-Na | 99.85:0.0:0.15 |
| 22 | 16% | 15% | 60 | 40 | SCNT | CMC-Na | 99.84:0.01:0.15 |
| 23 | 16% | 15% | 60 | 40 | SCNT | CMC-Na | 99.35:0.5:0.15 |
| 24 | 16% | 15% | 60 | 40 | SCNT | CMC-Na | 98.85:1.0:0.15 |
| 25 | 16% | 15% | 60 | 40 | SCNT | Polyvinylpyrrolidone (PVP) | 99.75:0.1:0.15 |
| 26 | 16% | 15% | 60 | 40 | SCNT | Polyvinylidene fluoride (PVP) | 99.75:0.1:0.15 |
| 27 | 16% | 15% | 60 | 40 | SCNT | Polyacrylic acid sodium (PAANa) | 99.75:0.1:0.15 |
| 28 | 16% | 15% | 60 | 40 | SCNT | / | 99.9:0.1:0.0 |
| 29 | 16% | 15% | 60 | 40 | SCNT | CMC-Na | 99.5:0.1:0.4 |
| 30 | 16% | 15% | 60 | 40 | SCNT | CMC-Na | 99.875:0.1:0.025 |
| 31 | 16% | 15% | 60 | 40 | Amorphous carbon | / | 99.9:0.1:0.0 |
| 32 | 16% | 15% | 60 | 40 | Vapor-deposited carbon fiber | / | 99.9:0.1:0.0 |
| 33 | 16% | 15% | 60 | 40 | Graphene | / | 99.9:0.1:0.0 |

Note: "/" in Table 2 means that a corresponding preparation parameter is not applicable.

Comparative Example 1, Comparative Example 2, Comparative Example 3, Comparative Example 4, Comparative Example 5, and Comparative Example 6 have the same preparation steps as Example 1 for preparation of a negative electrode active material, preparation of a negative electrode plate, preparation of a positive electrode plate, preparation of a liquid electrolyte, preparation of a separator, and preparation of a lithium-ion battery, except for the changes of related preparation parameters shown in Table 3.

**Table 3**

| Comparative example | Porosity $\alpha_1$ of silicon-based particle | Porosity $\alpha_2$ of negative electrode plate | Percentage of carbon in silicon-based particle (wt%) | Percentage B of silicon in silicon-based particle (wt%) |
|---|---|---|---|---|
| 1 | 8% | 15% | 60 | 40 |
| 2 | 60% | 15% | 60 | 40 |
| 3 | 32% | 10% | 55 | 45 |
| 4 | 32% | 62% | 55 | 45 |
| 5 | 5% | 28% | 55 | 45 |
| 6 | 67% | 28% | 55 | 45 |

Preparation parameters of Example 1, Example 2, Example 3, Example 4, Example 5, Example 6, Example 7, Comparative Example 1, and Comparative Example 2 are shown in Table 4.

**Table 4**

| | Value of P | Porosity $\alpha_1$ of silicon-based particle | Percentage B of silicon in silicon-based particle (wt%) | Specific surface area (m²/g) |
|---|---|---|---|---|
| Example 1 | 0.2 | 16% | 40 | 3.6 |
| Example 2 | 0.4 | 25% | 40 | 6.5 |
| Example 3 | 0.8 | 38% | 40 | 10.3 |
| Example 4 | 1.1 | 47% | 40 | 15.4 |
| Example 5 | 1.6 | 56% | 40 | 20.5 |
| Example 6 | 1.5 | 38% | 20 | 13.3 |
| Example 7 | 0.5 | 38% | 60 | 4.3 |
| Comparative Example 1 | 0.1 | 8% | 40 | 3.2 |
| Comparative Example 2 | 1.9 | 60% | 40 | 47.7 |

Test results of Example 1, Example 2, Example 3, Example 4, Example 5, Example 6, Example 7, Comparative Example 1, and Comparative Example 2 are shown in Table 5.

**Table 5**

| | Capacity retention rate after 400 cycles at 25°C | Capacity retention rate after 200 cycles at 45°C | Deformation rate after 400 cycles at 25°C | Deformation rate after 200 cycles at 45°C | Volumetric energy density (Wh/L) |
|---|---|---|---|---|---|
| Example 1 | 83.6% | 82.5% | 10.3% | 10.4% | 786 |
| Example 2 | 88.9% | 87.6% | 8.2% | 8.3% | 792 |
| Example 3 | 92.4% | 91.5% | 6.3% | 7.1% | 816 |
| Example 4 | 91.3% | 88.6% | 6.3% | 7.0% | 782 |

(continued)

|  | Capacity retention rate after 400 cycles at 25°C | Capacity retention rate after 200 cycles at 45°C | Deformation rate after 400 cycles at 25°C | Deformation rate after 200 cycles at 45°C | Volumetric energy density (Wh/L) |
|---|---|---|---|---|---|
| Example 5 | 90.3% | 87.1% | 6.2% | 6.7% | 770 |
| Example 6 | 93.3% | 92.1% | 6.0% | 6.2% | 752 |
| Example 7 | 87.7% | 86.3% | 9.6% | 9.3% | 806 |
| Comparative Example 1 | 76.4% | 74.6% | 12.6% | 11.8% | 770 |
| Comparative Example 2 | 81.3% | 78.6% | 11.3% | 11.0% | 750 |

Preparation parameters of Example 8, Example 9, Example 10, Example 11, Example 12, Example 13, Example 14, Example 15, Example 16, Example 17, Comparative Example 3, Comparative Example 4, Comparative Example 5, and Comparative Example 6 are shown in Table 6.

**Table 6**

|  | Porosity $\alpha_1$ of silicon-based particle | Porosity $\alpha_2$ of negative electrode plate | Percentage B of silicon in silicon-based particle (wt%) | Gram capacity (mAh/g) | Compacted density of negative electrode plate (g/cm$^3$) |
|---|---|---|---|---|---|
| Example 8 | 32% | 15% | 45 | 500 | 1.78 |
| Example 9 | 32% | 19% | 45 | 500 | 1.75 |
| Example 10 | 32% | 28% | 45 | 500 | 1.68 |
| Example 11 | 32% | 35% | 45 | 500 | 1.63 |
| Example 12 | 32% | 41% | 45 | 500 | 1.61 |
| Example 13 | 15% | 28% | 45 | 500 | 1.57 |
| Example 14 | 18% | 28% | 45 | 500 | 1.68 |
| Example 15 | 34% | 28% | 45 | 500 | 1.68 |
| Example 16 | 45% | 28% | 45 | 500 | 1.68 |
| Example 17 | 60% | 28% | 45 | 500 | 1.68 |
| Comparative Example 3 | 32% | 10% | 45 | 500 | 1.83 |
| Comparative Example 4 | 32% | 62% | 45 | 500 | 1.41 |
| Comparative Example 5 | 5% | 28% | 45 | 500 | 1.68 |
| Comparative Example 6 | 67% | 28% | 45 | 500 | 1.68 |

Test results of Example 8, Example 9, Example 10, Example 11, Example 12, Example 13, Example 14, Example 15, Example 16, Example 17, Comparative Example 3, Comparative Example 4, Comparative Example 5, and Comparative Example 6 are shown in Table 7.

**Table 7**

|  | Capacity retention rate after 400 cycles at 25°C | Capacity retention rate after 200 cycles at 45°C | Deformation rate after 400 cycles at 25°C | Deformation rate after 200 cycles at 45°C | Volumetric energy density (Wh/L) |
|---|---|---|---|---|---|
| Example 8 | 85.1% | 84.3% | 10.1% | 10.5% | 799 |
| Example 9 | 87.6% | 85.1% | 8.7% | 8.9% | 798 |
| Example 10 | 91.6% | 90.3% | 6.7% | 7.1% | 816 |
| Example 11 | 90.5% | 89.5% | 6.8% | 7.4% | 795 |
| Example 12 | 88.6% | 86.3% | 7.4% | 7.9% | 782 |
| Example 13 | 87.3% | 83.4% | 10.1% | 10.7% | 795 |
| Example 14 | 89.4% | 85.5% | 8.8% | 9.7% | 797 |
| Example 15 | 91.6% | 90.3% | 7.1% | 7.4% | 817 |
| Example 16 | 90.5% | 88.1% | 6.9% | 7.5% | 777 |
| Example 17 | 91.2% | 89.7% | 6.7% | 7.3% | 763 |
| Comparative Example 3 | 75.6% | 75.2% | 12.5% | 13.8% | 776 |
| Comparative Example 4 | 77.3% | 74.3% | 11.7% | 13.3% | 743 |
| Comparative Example 5 | 74.6% | 75.1% | 12.6% | 13.8% | 745 |
| Comparative Example 6 | 76.3% | 75.8% | 11.3% | 12.4% | 742 |

Preparation parameters of Example 2, Example 18, Example 19, Example 20, Example 21, Example 22, Example 23, Example 24, Example 25, Example 26, Example 27, Example 28, Example 29, Example 30, Example 31, Example 32, and Example 33 are shown in Table 8.

**Table 8**

|  | Type of carbon material | Percentage of carbon material | Type of dispersant | Percentage of dispersant |
|---|---|---|---|---|
| Example 2 | / | / | / | / |
| Example 18 | SCNT | 0.10% | CMC-Na | 0.15% |
| Example 19 | MCNT | 0.10% | CMC-Na | 0.15% |
| Example 20 | SCNT:MCNT = 1:1 | 0.10% | CMC-Na | 0.15% |
| Example 21 | SCNT | 0.00% | CMC-Na | 0.15% |
| Example 22 | SCNT | 0.01% | CMC-Na | 0.15% |
| Example 23 | SCNT | 0.50% | CMC-Na | 0.15% |
| Example 24 | SCNT | 1.00% | CMC-Na | 0.15% |

(continued)

| | Type of carbon material | Percentage of carbon material | Type of dispersant | Percentage of dispersant |
|---|---|---|---|---|
| Example 25 | SCNT | 0.10% | PVP | 0.15% |
| Example 26 | SCNT | 0.10% | PVDF | 0.15% |
| Example 27 | SCNT | 0.10% | PAANa | 0.15% |
| Example 28 | SCNT | 0.10% | 0 | 0 |
| Example 29 | SCNT | 0.10% | CMC-Na | 0.4% |
| Example 30 | SCNT | 0.10% | CMC-Na | 0.025% |
| Example 31 | Amorphous carbon | 0.10% | 0 | 0 |
| Example 32 | Vapor-deposited carbon fiber | 0.10% | 0 | 0 |
| Example 33 | Graphene | 0.10% | 0 | 0 |
| Note: "/" in Table 8 means that a corresponding preparation parameter is not applicable. | | | | |

Test results of Example 2, Example 18, Example 19, Example 20, Example 21, Example 22, Example 23, Example 24, Example 25, Example 26, Example 27, Example 28, Example 29, Example 30, Example 31, Example 32, and Example 33 are shown in Table 9.

**Table 9**

| | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 2 | 91.4% | 90.6% | 6.7% | 8.5% | 87.7% |
| Example 18 | 93.6% | 91.3% | 6.6% | 8.0% | 87.5% |
| Example 19 | 92.1% | 89.2% | 6.9% | 8.2% | 87.6% |
| Example 20 | 92.7% | 90.2% | 6.8% | 8.5% | 87.0% |
| Example 21 | 90.5% | 88.4% | 6.7% | 9.9% | 84.8% |
| Example 22 | 93.7% | 91.5% | 6.5% | 8.4% | 87.6% |
| Example 23 | 93.8% | 91.7% | 6.9% | 8,3% | 88.1% |
| Example 24 | Unable to process | | | | |

(continued)

|  | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 25 | 91.4% | 88.5% | 7.9% | 9.3% | 84.1% |
| Example 26 | 91.6% | 90.4% | 7.6% | 8.9% | 84.6% |
| Example 27 | 92.3% | 90.8% | 7.3% | 8.4% | 85.3% |
| Example 28 | 89.7% | 86.5% | 8.8% | 10.1% | 85.4% |
| Example 29 | 92.4% | 90.1% | 8.0% | 9.3% | 81.6% |
| Example 30 | 92.6% | 90.3% | 6.9% | 8.4% | 87.6% |
| Example 31 | 91.5% | 91.0% | 6.6% | 8.0% | 87.7% |
| Example 32 | 92.8% | 91.3% | 6.7% | 8.0% | 88.1% |
| Example 33 | 92.6% | 91.8% | 6.6% | 7.9% | 88.9% |

From Example 1, Example 2, Example 3, Example 4, Example 5, Comparative Example 1, and Comparative Example 2, it can be seen that when a percentage B of silicon was constant, a gram capacity of the negative electrode material layer did not significantly change. As the porosity $\alpha_1$ of the silicon-based particles increased, the specific surface area of the silicon-based particles gradually increased. From Example 3, Example 6, and Example 7, it can be seen that a change in the percentage B of silicon in the silicon-based particles caused the change in the value of P, which affected the gram capacity of the negative electrode material layer and the specific surface area of the silicon-based particles.

From Example 1, Example 2, Example 3, Example 4, Example 5, Example 6, Example 7, Comparative Example 1, and Comparative Example 2, it can be seen that when P was excessively low, it was difficult for pores reserved inside the silicon-based particles to buffer volume swelling of nano-silicon during the lithium intercalation, it was difficult for a carbonaceous material with such mechanical strength to withstand enormous swelling stress, and as a result, a structure of the silicon-based particles broke down, exacerbating the electrochemical performance of the lithium-ion battery. When P was excessively high, pores reserved inside the silicon-based particles were too large, and as a result, mechanical compressive strength of the carbonaceous material deteriorated, the silicon-based particles were prone to breakdown during processing, and a large number of fresh interfaces were exposed, exacerbating first-cycle cycle efficiency and cycling performance of the lithium-ion battery and reducing the overall energy density of the lithium-ion battery. When the value of P was within the defined range of this application, the cycling performance, the anti-swelling performance, and the volumetric energy density of the lithium-ion battery could be effectively improved. In this case, the silicon-based particles could not only provide enough space for the swelling of silicon during lithium intercalation, but also ensure the stability and processability of the structure.

From Example 8, Example 9, Example 10, Example 11, Example 12, Comparative Example 3, and Comparative Example 4, it can be seen that when the porosity of the silicon-based particles was constant, and the porosity of the negative electrode plate was too low, the cycling performance and the swelling performance of the lithium-ion battery deteriorated significantly. This was because the pores inside the silicon-based particles could not completely alleviate volume swelling of silicon during lithium intercalation, and the porosity of the negative electrode plate was needed to further alleviate the swelling during the intercalation of lithium into silicon; and the volume swelling made it difficult for the liquid electrolyte to implement full infiltration, increasing the migration distance of the lithium ions and deteriorating the kinetic performance of lithium-ion batteries. When the porosity of the negative electrode plate was too high, a gap between the particles in the negative electrode material layer was too large, and the contact area between the particles was reduced, which reduced intercalation sites for lithium ions; and the lithium-ion battery was prone to demoulding during the cycling, causing the cycling performance, the anti-swelling performance, and the kinetic performance of the lithium-ion battery to significantly deteriorate. In addition, the compacted density of the negative electrode plate was reduced, and the volumetric energy density of the lithium-ion battery was also significantly reduced.

From Example 13, Example 14, Example 15, Example 16, Example 17, Comparative Example 7, and Comparative Example 8, it can be seen that when the porosity of the negative electrode plate was constant, and the porosity of the silicon-based particles was too low, the cycling performance and the swelling performance of the lithium-ion battery significantly deteriorated. This was because the space reserved inside the silicon-based particles could not buffer the volume swelling of nano-silicon during the lithium intercalation. In this case, the mechanical strength of the carbonaceous material could not withstand the huge swelling stress, causing the structure of the silicon-based particles to crack during cycling. When the porosity of the silicon-based particles was too high, the compressive strength of the carbonaceous material was reduced, and as a result, the silicon-based particles were prone to breakdown during processing, deteriorating the electrical performance; and as the compacted density of the electrode plate decreased, the volumetric energy density of the lithium-ion battery was also reduced.

From Example 8, Example 9, Example 10, Example 11, Example 12, Example 13, Example 14, Example 15, Example 16, and Example 17, it can be seen that the porosity of the negative electrode plate and the porosity of the silicon-based particles in the lithium-ion battery were appropriately arranged, which could more effectively improve the cycling performance and the anti-swelling performance of the lithium-ion battery, and improve the volumetric energy density of the lithium-ion battery.

From comparison between Example 18, Example 19, Example 20, Example 21, Example 22, Example 23, Example 24, Example 25, Example 26, Example 27, Example 28, Example 29, Example 30, Example 31, Example 32, Example 33, and Example 2, it can be seen that adding 0.1wt% SCNT to the surfaces of the silicon-based particles could significantly improve the cycling performance, adding 0.1wt% MCNT could slightly improve the cycling performance, and adding 0.05wt% SCNT and 0.05wt% MCNT could improve the cycling performance to some extent. In Example 18, Example 21, Example 22, Example 23, and Example 24, the amount of SCNT added was changed. Controlling the amount of SCNT added to be equal to or less than 0.5% could effectively improve the cycling performance. However, when the amount of SCNT added reached 0.5wt%, the cycling performance was not so significantly improved as it was when the amount of SCNT added was 0.1wt%, while the first-cycle efficiency was deteriorated; and when the amount of SCNT added reached 1wt%, too much SCNT made it unable to process the slurry. Different dispersants in Example 18, Example 25, Example 26, and Example 27 were compared. When no dispersant was added, SCNT could not be dispersed, the effect was poor, and cycling performance and deformation of the lithium-ion battery deteriorated. When PVP and PVDF were used as the dispersant, the cycling performance slightly deteriorated when compared with that when CMC-Na and PAANa were used. In Example 18, Example 28, Example 29, and Example 30, the amount of dispersant added was changed. When the amount of dispersant was 0.4wt%, a dispersion effect was improved, but too many dispersants would exacerbate the rate performance. When the amount of dispersant was 0.025wt%, the dispersing effect was poor, and the cycling performance and the rate performance deteriorated compared with those when the amount of dispersant was 0.15wt%. Coatings of different carbon materials in Example 28, Example 31, Example 32, and Example 33 were compared. From the results, it can be seen that the coating effect of CNT and graphene was optimal. This was because the coatings of CNT and graphene not only increased the electronic conductivity of the material, but also increased the contact points between the materials, thereby alleviating the cycling attenuation caused by a contact failure.

Based on the foregoing analysis, it can be seen that the negative electrode plate provided in this application could significantly improve the cycling performance and reduce swelling and deformation for the electrochemical apparatus.

The foregoing descriptions are merely preferable embodiments of this application, but are not intended to limit this application. Any modification, equivalent replacement, or improvement made without departing from the spirit and principle of this application shall fall within the protection scope of this application.

**Claims**

1. A negative electrode plate, comprising a negative electrode material layer, wherein the negative electrode material layer comprises silicon-based particles and graphite particles, and the silicon-based particles comprise silicon and carbon; and

   porosity $\alpha_1$ of the silicon-based particles and a percentage B of silicon in the silicon-based particles satisfy $P=0.5\alpha_1/(B-\alpha_1 B)$, wherein $0.2 \leq P \leq 1.6$; wherein
   the porosity $\alpha_1$ of the silicon-based particles is 15% to 60%, and the percentage B of silicon in the silicon-based particles is 20wt% to 60wt%.

2. The negative electrode plate according to claim 1, wherein porosity $\alpha_2$ of the negative electrode plate is 15% to 41%.

3. The negative electrode plate according to claim 2, wherein a sum $\alpha$ of the porosity $\alpha_1$ of the silicon-based particles and the porosity $\alpha_2$ of the negative electrode plate satisfies 45%<$\alpha$<90%.

4. The negative electrode plate according to claim 1, wherein a percentage of silicon-based particles in the negative electrode material layer is 3wt% to 80wt%.

5. The negative electrode plate according to claim 1, wherein a peak intensity ratio of a peak D to a peak G in a Raman test of the silicon-based particles is 0.2 to 3; wherein
the peak D is a peak whose shift range is 1255 cm$^{-1}$ to 1355 cm$^{-1}$ in a Raman spectrum of the silicon-based particles, and the peak G is a peak whose shift range is 1575 cm$^{-1}$ to 1600 cm$^{-1}$ in the Raman spectrum of the silicon-based particles.

6. The negative electrode plate according to claim 1, wherein a carbon material is present in surfaces of the silicon-based particles, and the carbon material comprises at least one of amorphous carbon, carbon nanotube, carbon nanoparticle, vapor-deposited carbon fiber, or graphene.

7. The negative electrode plate according to claim 1, wherein a median particle size $D_v50$ of the silicon-based particles is less than 20 $\mu$m.

8. The negative electrode plate according to claim 1, wherein a specific surface area of the silicon-based particles is less than 50 m$^2$/g.

9. An electrochemical apparatus, comprising the negative electrode plate according to any one of claims 1 to 8.

10. An electronic apparatus, comprising the electrochemical apparatus according to claim 9.

FIG. 1

FIG. 2

## INTERNATIONAL SEARCH REPORT

| International application No. |
| --- |
| **PCT/CN2020/140378** |

**A.    CLASSIFICATION OF SUBJECT MATTER**

H01M 4/134(2010.01)i;  H01M 4/38(2006.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, CNKI, CNABS, DWPI, SIPOABS: 负极, 硅, 石墨, 碳, 孔隙率, 含量, 比例, anode, carbon, silicon, Si, porosity, ratio, graphite

**C.    DOCUMENTS CONSIDERED TO BE RELEVANT**

| Category* | Citation of document, with indication, where appropriate, of the relevant passages | Relevant to claim No. |
| --- | --- | --- |
| A | CN 107204431 A (BYD COMPANY LTD.) 26 September 2017 (2017-09-26) description, paragraphs 0015-0034 | 1-10 |
| A | CN 108199023 A (JILIN UNIVERSITY et al.) 22 June 2018 (2018-06-22) entire document | 1-10 |
| A | CN 109273680 A (SICHUAN X-DANFU ENERGY TECHNOLOGY CO., LTD.) 25 January 2019 (2019-01-25) entire document | 1-10 |
| A | CN 106876665 A (NANCHANG RESEARCH INSTITUTE, SUZHOU INSTITUTE OF NANO-TECH AND NANO-BIONICS (SINANO), CHINESE ACADEMY OF SCIENCES) 20 June 2017 (2017-06-20) entire document | 1-10 |
| A | US 2016118655 A1 (SHIN-ETSU CHEMICAL CO., LTD.) 28 April 2016 (2016-04-28) entire document | 1-10 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 June 2021** | **27 September 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/140378**

| Patent document cited in search report | | | Publication date (day/month/year) | Patent family member(s) | | | Publication date (day/month/year) |
|---|---|---|---|---|---|---|---|
| CN | 107204431 | A | 26 September 2017 | CN | 107204431 | B | 21 February 2020 |
| CN | 108199023 | A | 22 June 2018 | None | | | |
| CN | 109273680 | A | 25 January 2019 | CN | 109273680 | B | 20 October 2020 |
| CN | 106876665 | A | 20 June 2017 | CN | 106876665 | B | 02 August 2019 |
| US | 2016118655 | A1 | 28 April 2016 | CN | 105264698 | A | 20 January 2016 |
| | | | | WO | 2014192225 | A1 | 04 December 2014 |
| | | | | KR | 20160011633 | A | 01 February 2016 |
| | | | | JP | 2014229583 | A | 08 December 2014 |
| | | | | JP | 6100610 | B2 | 22 March 2017 |

Form PCT/ISA/210 (patent family annex) (January 2015)